# EUROPEAN PATENT SPECIFICATION

(11) **EP 0 611 004 B1**
(45) Date of publication and mention of the grant of the patent: **12.01.2000**
(21) Application number: 94200314.6
(22) Date of filing: 04.02.1994
(51) Int. Cl.: A01J 7/00

(54) **A construction for milking animals**
Vorrichtung zum Melken von Tieren
Dispositif de traite d'animaux

(30) Priority: 08.02.1993 NL 9300242
(43) Date of publication of application: 17.08.1994
(73) Proprietor: MAASLAND N.V., 3155 PD Maasland (NL)
(72) Inventor: van den Berg, Karel, NL-2971 BR Bleskensgraaf (NL)
(74) Representative: Corten, Maurice Jean F.M.

(56) References cited:
- EP-A- 0 300 582
- EP-A- 0 332 232
- EP-A- 0 480 542
- WO-A-93/00001

## Description

The present invention relates to a construction for milking animals, such as cows, provided with a milking robot with a robot arm with at least two teat cups and with coupling means fitted between a teat cup and the robot arm, the coupling means are displaceable so that at least two of the teat cups, one after another, can be coupled with the coupling means in order to connect them to the teats of the animal.

Such a construction is known from patent application NL 8802332.

In this prior-art construction, the coupling means comprise an electromagnet which is capable of being swivelled to close by the outer jacket of a teat cup and then, upon being energized, it seizes the teat cup. The electromagnet is placed on an outer jacket of a cylinder, which outer jacket is movable in height with respect to the robot arm. Connecting a teat cup to a teat takes place by consecutively swivelling the electromagnet to close by the outer jacket of the teat cup, energizing the electromagnet and moving it together with the teat cup in upward direction towards the teat to be connected.

Another construction is known from document EP-A-0 300 582. In this construction each teat cup is provided with mechanical coupling means. This construction has the disadvantage that it is expensive to provide each teat cup with separate mechanical coupling means, while furthermore the robot arm construction is relatively large due to the mechanical coupling means for each teat cup.

It is an object of the invention to provide a construction as specified in the opening paragraph, in which the above-mentioned disadvantages do not occur or are at least minimized and which operate on a principle different from the electro-mechanical coupling as described in patent application NL 8802332.

According to the invention, this is achieved in that the coupling means are implemented as mechanical coupling means. In this way a relatively cheap and compact construction can be realized. Furthermore, mechanical seizure of the teat cup has the advantage that a firm seizure of the teat cup can be effected by means of a relatively compact construction. This reduces the risk that the animal to be milked kicks off a teat cup to be connected when it is moving upwards. Moreover, a mechanical coupling has the advantage that its reliability is higher; for seizing a teat cup electromechanically is still susceptible to power failures.

In a first embodiment of the invention, the gripping member comprises a gripper, on the free extremities of which there is provided a curvature corresponding with the outer jacket of a teat cup. After a teat cup has been seized by the gripping member, the coupling means move the teat cup in a mainly upward motion in order to apply the teat cup to a teat of an animal to be milked. According to another feature of the invention, the gripper is swivellable about a horizontal axis and, during swivelling, the gripper arms are moved towards each other or away from each other. So, by swivelling the gripper it is thus possible to seize the teat cup or to release it. According to a further feature of the invention, for swivelling the gripper there is provided a tumbler which is connected with the gripper arms on one end and with an actuating cylinder on the other end. According to another feature of the invention, for moving the gripper arms towards each other or away from each other, on the gripper there is provided a stop having a flat butting portion which merges into a bevelled butting portion. According to a further feature of the invention, on the teat cup to be seized there is provided an annular stop, against which the gripper bears when the teat cup is seized. The teat cup is thus prevented from sliding longitudinally with respect to the gripper.

In a preferred embodiment of the invention, the coupling means extend in an upward direction. According to a further feature of the invention, the gripping member comprises a hook-on member, whilst the coupling means further comprise at least one receiving member which meshes with the hook-on member, with a receiving member being provided on a teat cup and a hook-on member being on the robot arm, or conversely. Accordingly, the invention also relates to a construction for milking animals, such as cows, provided with a milking robot with a robot arm capable of carrying one or several teat cups, whilst there are further provided coupling means which are at least partly located on the robot arm and by means of which a teat cup is seized and subsequently moved in a mainly upward motion to connect the teat cup to a teat of the animal to be milked, characterized in that the coupling means comprise at least one receiving member and one hook-on member, with a receiving member being provided on a teat cup and a hook-on member on the robot arm, or conversely. Mechanical seizure of a teat cup by means of a hook-on arrangement has the advantage that a relatively simple construction will serve the purpose.

According to a further feature of the invention, in the two exemplary embodiments there are provided swivelling means on the robot arm, by which means the coupling means are swivellable about an axis in an upward direction. According to a further feature of the invention, the coupling means are disposed in the centre of a circle described by at least two teat cups. Such a disposition has the advantage that, when a first teat cup is connected to a teat of the animal to be milked and the gripping member has returned to the starting position, a next teat cup can be seized by swivelling the gripping member through a predetermined swivelling angle.

According to an exemplary embodiment of the invention, the coupling means are provided on a slide which is near the end of the robot arm and is movable in the longitudinal direction of the end of the robot arm. The application of a slide provides the possibility of disposing the two fore teat cups about a centre which is different from that of the two hind teat cups. After the two fore teat cups have been connected to the teats of the animal to be milked, the swivelling means can be moved in the longitudinal direction of the robot arm by means of the slide, whereafter the two remaining teat cups can be connected to the teats of the animal to be milked. In a preferred embodiment, the coupling means are in the centre of a circle described by the four teat cups. An advantage of such a disposition is that all four of the teat cups can be seized through swivelling the coupling means.

According to a further feature of the invention, each teat cup is connected with the robot arm through a flexible connecting device, one end of which is connected with the bottom side of the teat cup holder and the other end with an actuating cylinder connected to a power source comprising two hydraulic or pneumatic pressure units, which come into action when the teat cup is being connected to a teat and when the teat cup is being withdrawn to the robot arm, respectively. A force opposite to the upward movement can be exerted through the flexible connecting device, which has the advantage that the teat cup is constantly kept in a vertical position, whilst - in case the teat cup is seized by hooking on - the risk of breaking the connection between the teat cup and coupling means is reduced.

In a second embodiment of the invention, the receiving member comprises a narrow strip which is directed obliquely downwards, is disposed near the top side of the teat cup and extends over approximately a quarter of the teat cup circumference.

In a third embodiment of the invention, the receiving member comprises a ring, which is disposed near the top side of the teat cup and is provided with a plurality of tapered recesses located next to each other at the bottom side. A receiving member having a plurality of tapered recesses located next to each other has the advantage that the starting position of a teat cup on the robot arm before seizure by the coupling means is not necessarily always the same; in any position on the robot arm, the teat cup can always be seized by the coupling means. According to a further feature of the invention in the second exemplary embodiment, under the first ring provided near the top side of the teat cup there is provided a second ring located at a certain distance from the upper ring. The application of two rings enables a stable coupling between teat cup and coupling means to be achieved.

In a fourth exemplary embodiment of the invention, the receiving member comprises a strip, which is provided near the top side of the teat cup and which extends over a quarter of the teat cup circumference, with, at the bottom side of the strip, a single tapered recess extending over approximately the full strip length.

In conformity with the third and fourth exemplary embodiments, the hook-on member according to the invention comprises a pin pointing upwards which is disposed at a distance from the swivelling means. In case the teat cup is equipped with a second ring, according to a further feature of the invention, the swivelling means comprise a first pin pointing upwards which is disposed near the top side of the swivelling means and a second pin pointing upwards which is disposed near the bottom side of the swivelling means. The application of two pins results in a more a stable seizure of the teat cups. According to a feature of the invention, in the quiescent condition, when the teat cups are on the robot arm, the distance from the first pin pointing upwards to the upper receiving member is shorter than the distance from the second pin pointing upwards to the lower receiving member. Owing to the fact that the distance between the upper pin and the upper receiving member is less than that between the lower pin and the lower receiving member, the teat cup is first engaged on the top side and the lower pin is positioned in the lower coupling point with a slight play. The play in the lower coupling point permits the teat cup to be rotated slightly, facilitating connection to a teat being in an oblique position with respect to the teat cup.

In conformity with the first exemplary embodiment, the swivelling means according to a further feature of the invention comprise a block provided on the swivelling means, with the block side facing the teat cup being provided with a seat corresponding with the outer jacket of a teat cup whilst, on the top side of the block, near the side facing the teat cup, there is provided an edge capable of meshing with a narrow strip which is provided on the teat cup and which strip is in an obliquely downward direction. According to still another feature of the invention, the block is provided with two seats arranged in the shape of a V. Particularly two seats disposed in a V-shape, when combined with a construction movable in the longitudinal direction of the robot arm, such as a slide, have the advantage that, when the teat cup on the left-hand front side of the robot arm has been seized with the first seat and is connected to a teat, connection of the teat cup on the left-hand rear side of the robot arm can take place by moving the slide rearwards and seizing the teat cup with the other seat. The swivelling means thus need not be set to work for two teat cups which are located behind each other. In an alternative embodiment, the block comprises an electromagnet which is energized during and/or after inserting the hook-on device into the receiving member, causing the jacket of the teat cup to make contact with the seat of the block. An advantage of the utilization of the electromagnet in the seat of the block is that the teat cup comes to butt firmly against the block. If the electromagnet is energized during hooking-on, the seat of the block slides on the jacket of the teat cup and a reliable coupling of the hook-on member to the receiving member is effected. It will be obvious that, in the latter case where the seat and the outer jacket slide on each other, a relatively weak electromagnet should be utilized. According to still another feature of the invention, the block is provided with a through channel to prevent the accumulation of dirt on the top side of the block. According to a feature of the invention, the receiving member is also provided with perforations to prevent clogging.

According to a further feature of the invention, each teat cup is provided with a milk and pulsator hose which is at least partly within a tubular housing in the longitudinal direction of the robot arm. The provision of accommodation for the milk and pulsator hoses in a housing has the advantage that the animal is not troubled by said hoses. Accordingly, the invention also relates to a construction for milking animals, such as cows, provided with a milking robot with a robot arm with one or several teat cups and coupling means provided between a teat cup and the robot arm, characterized in that the teat cups comprise milk and pulsator hoses which, when viewed in the longitudinal direction of the robot arm, are virtually vertically looped in a tubular housing.

According to a further feature of the invention, the tubular housings have a height which practically corresponds to the height of a teat cup. In connecting the teat cups to the teats, the hoses can thus in height freely move along with the teats. Again, according to another feature of the invention, the milk and pulsator hoses, when viewed in the longitudinal direction of the robot arm, are looped in a tubular housing. In this way it is possible to store a relatively long hose in a small housing.

To prevent the milk and pulsator hoses of the foremost teat cups from tangling or interfering with each other in the course of connection, the swivelling means according to another feature of the invention comprise a guide which guides each of the milk and pulsator hoses of the foremost teat cups along one side of the swivelling means. According to a further feature of the invention, the guide comprises a U-shaped bent wire, of which the leg ends of the U-shape are bent over to form a hook, while the base of the U-shaped wire comprises a ring slid over the swivelling means and rotatably supported by an other ring fixed in position on the swivelling means.

For a better understanding of the invention, embodiments of the invention will now be described with reference to the accompanying drawings, in which:
Figure 1 is a plan view of the foremost part of a robot arm with a gripper provided thereon;
Figure 2 is a side view of a teat cup seized by the gripper according to Figure 1;
Figure 3 is a plan view of a second robot arm, where the coupling means comprise a block provided with two butting faces, also called seats, arranged in a V-shape;
Figure 4 is a sectional view of the block taken on the line IV-IV of Figure 3;
Figure 5 shows a side view of a teat cup coupled by means of the block;
Figure 6 is a side view of a third embodiment of the invention, wherein the coupling means comprise a hook-on member and a ring having tapered recesses which is provided on the teat cup;
Figure 7 shows a side view of a detail according to Figure 6;
Figure 8 is a plan view of a concentric arrangement of the teat cups, where the interspacing of teat cups is at a minimum;
Figure 9 is a plan view of a robot arm, where the teat cups are arranged at a certain mutual distance on the robot arm;
Figure 10 is a side view of a fourth embodiment of the invention, wherein the coupling means comprise a hook-on member and a receiving member having one tapered recess;
Figure 11 shows a section taken on the line XI-XI of Figure 10;
Figure 12 shows a plan view of a robot arm, where the milk and pulsator hoses of the teat cups are arranged in a housing in the longitudinal direction of the robot arm;
Figure 13 shows a side view of a guide for the milk and pulsator hoses, taken on the line XIII-XIII in Figure 12.

In the drawings, corresponding components have been denoted by the same reference numbers. Moreover, the invention is by no means limited to the embodiments as shown and described here: these embodiments only serve to illustrate the inventive idea.

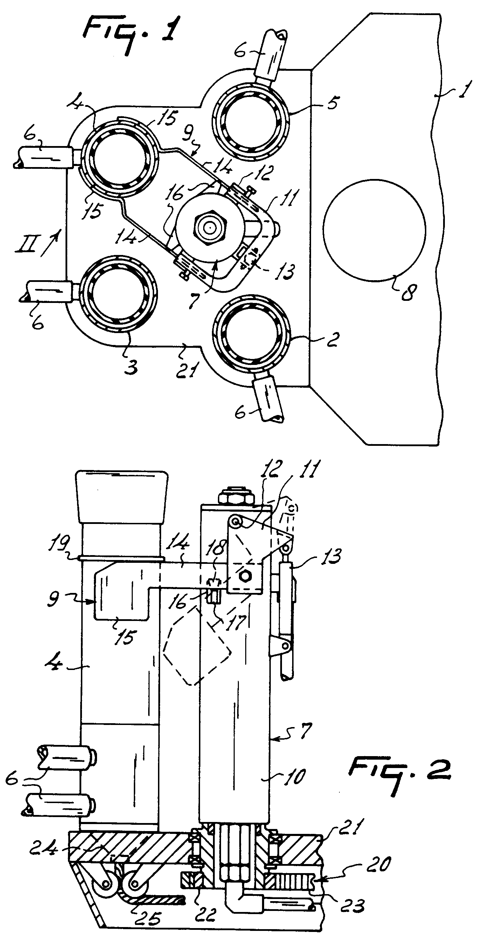

In Figure 1, the end of a robot arm 1 according to the invention is depicted; this robot arm 1 is installed at the side of a milking parlour not shown here. When an animal to be milked has arrived at the milking parlour and has been positioned appropriately, the robot arm is moved, on account of animal recognition data, from the front side to under the animal's udder. Such a robot arm is described in patent application NL 8802332.

In the plan view of the construction of Figure 1 there are provided teat cups 2, 3, 4 and 5. Each of the teat cups 2 - 5 is provided with a milk and pulsator hose 6. The teat cups 2 - 5 are such arranged on the end of the robot arm 1 that they together describe a circle. In the centre of the circle described by the teat cups 2 - 5 there are provided coupling means 7 on the robot arm 1. Furthermore, behind coupling means 7 and centrally on the robot arm 1, there are provided sensing means 8, through which the positions of the teats may be determined. The sensing means 8 are preferably implemented as a swivelling laser device.

In a first embodiment, in accordance with Figure 1 and Figure 2, the coupling means 7 comprise a gripper 9, by means of which each of the teat cups 2 - 5 can be seized and connected to a teat. The gripper 9 is provided near the top side of a swivelling lifting cylinder 10. The gripper comprises a U-shaped tumbler 11 rotatable about a horizontal shaft 12 provided near the top side of the lifting cylinder 10. On the outer jacket of the lifting cylinder 10 there is provided an actuating cylinder 13, by means of which the tumbler 11 can be swivelled. The actuating cylinder is placed in a vertical position and is hinged on the outer jacket of the lifting cylinder 10 on one end, whereas it is hinged at the centre of the U-shaped tumbler 11 on the other end. On either side of the lifting cylinder 10, near either end of the tumbler 11 there is provided a strip 14, preferably made of spring steel, which is perpendicular to either tumbler end. At the end of each strip 14 there is provided a widened portion 15 having a curvature corresponding to the outer jacket of a teat cup. The two strips 14 are the arms of the gripper 9. On either side of the lifting cylinder 10 and at the height of the tumbler 11 there are provided stops 16, against which the strips 14 of the gripper 9 bear. Each of the stops 16 has a flat butting portion 17 which merges into a bevelled butting portion 18. In swivelling the gripper 9 upwards by means of the actuating cylinder 13, the strip-type arms 14 move along the flat butting portion 17 and the oblique butting portion 18, respectively. In swivelling the gripper 9 downwards, the strip-type arms 14 move along the oblique butting portion 18 and the flat butting portion 17, respectively. By swivelling the gripper 9 upwards from the position indicated by dashed lines in Figure 2 into the position indicated by continuous lines, the strip-type arms 14 of the gripper 9 move towards each other and thus seize the teat cup. On each of the teat cups 2 - 5, near the top side there is provided an annular stop 19, against which the ends of the strip-type arms of the gripper 9 bear when a teat cup is seized. A teat cup seized by the gripper 9 can be disconnected by swivelling the gripper 9 downwards. In swivelling the gripper 9 downwards, the stops 16 move the strip-type arms 14 away from each other to such an extent that the curved ends of the strip-type arms 14 can travel past the outer jacket of the teat cup.

To seize an other teat cup on the robot arm 1, the gripper 9 is to be swivelled about a vertical axis. This is practicable because the lifting cylinder 10 can be swivelled with respect to the robot arm 1. Figure 2 includes a representation of swivelling means 20, by which the lifting cylinder 10 can be swivelled. The swivelling means 20 are provided on the bottom side of a platform 21, to which the lifting cylinder 10 is rotatably attached. The swivelling means 20 comprise a toothed wheel 22 which is fixed on the bottom side of the lifting cylinder 10 and which carries a timing belt 23 connected to a stepper motor now shown here. The lifting cylinder 10 and associated coupling means 7 can be swivelled through predetermined swivel angles by means of the stepper motor.

In the present embodiment, each of the teat cups 2 - 5 rests in a tapered recess 24 provided in the platform 21 on the end of the robot arm 1.

The teat cups 2 - 5 are kept in position in the tapered recesses 24 by flexible connecting members 25 which are coupled to pneumatic or hydraulic actuating cylinders (not shown here) provided in the end of the robot arm 1. In connecting the teat cups 2 - 5 to the teats of the animal to be milked, the teat cups can be moved upwards. When the milk flow stops or drops below a certain limit value, the teat cups 2 - 5 are drawn downwards into the tapered recesses 24 by energizing the actuating cylinders. In a preferred embodiment according to the invention, the actuating cylinders used for the withdrawal of the teat cups 2 - 5 are connected to a power source comprising two hydraulic or pneumatic pressure units which come into action successively in connecting the teat cups 2 - 5 to a teat and in withdrawing the teat cups 2 - 5 to the robot arm 1. The first pressure unit is especially important to the way of connecting the teat cups 2 - 5, which will be described hereinafter.

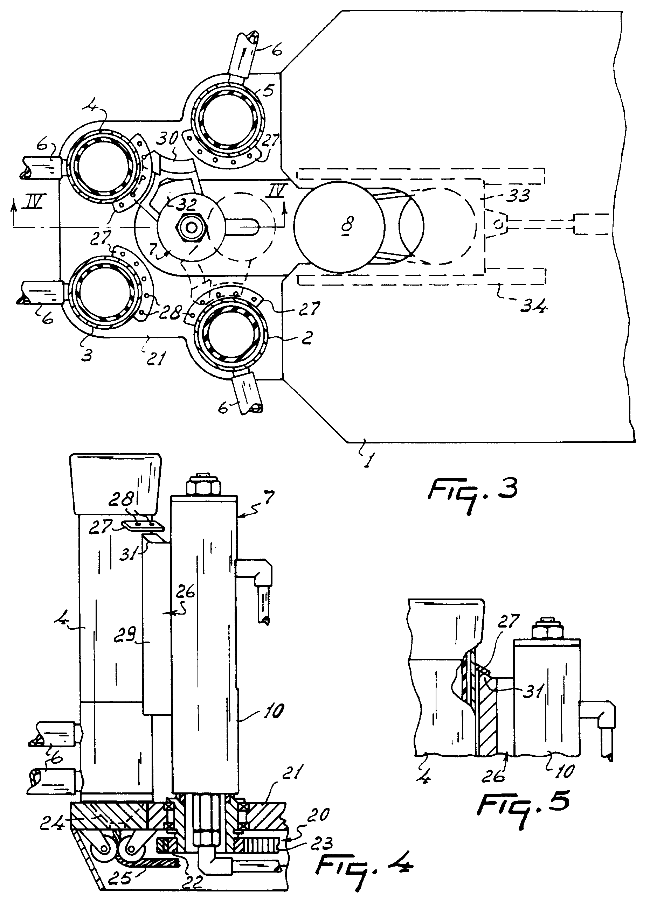

Figures 3 - 5 represent a second embodiment of the invention concerning the seizure of the teat cups 2 - 5. In the second exemplary embodiment, the coupling means 7 comprise a hook-on device 26 which is fitted on the lifting cylinder 10 and which operates in conjunction with a receiving member 27 provided on each of the teat cups 2 - 5. In the second exemplary embodiment, the receiving member 27 comprises a narrow strip pointing obliquely downwards which is provided near the top side of each of the teat cups 2 - 5 and extends over approximately a quarter of the circumference of teat cups 2 - 5. Each of the strips 27 is provided with perforations 28, which prevent the receiving member 27 from getting clogged on the bottom side. The hook-on member 26 comprises a block 29 mounted on the lifting cylinder 10, with the side of the block 29 facing the teat cups 2 - 5 being provided with two seats 30 arranged in a V-shape and each having a hollow profile corresponding to the outer jacket of the teat cups 2 - 5.

On the top side of the block 29 there is provided a raised edge 31 following the shape of the profile of the seats 30. The slanting edge 31 is dimensioned such that, in the event that a teat cup is connected during the upward movement of the lifting cylinder 10, the edge 31 directed obliquely upwards comes to butt and fit with the bottom side of the strip-type receiving member 27 (Figure 5). To prevent the top side of the block 29 from accumulating dirt, a through hole 32 is provided in the longitudinal direction. In the second exemplary embodiment of the invention, the swivelling means 20, the hook-on member 26 and the sensor means 8 are installed on a slide 33. The slide 33 is located near the end of the robot arm 1 and is capable of being moved on the robot arm 1 in the longitudinal direction of the end of the robot arm 1 by means of a rail 34. After e.g. the right-hand front teat cup on the robot arm 1 has been connected to a teat and the lifting cylinder 10 has been pushed in again, the coupling means 7 together with the swivelling means 20 are moved rearwards by means of the slide 33 and the right-hand rear teat cup 5 on the robot arm 1 can be seized and connected to a teat by moving the lifting cylinder 10 upwards by means of the other seat 30 of the block 29. The two seats 30 of the block 29 and the slide 33 provide the possibility of seizing two teat cups arranged behind each other and connecting them to the teats of an animal to be milked without any swivelling of block 29 being necessary. In addition, this construction enables the two rearmost teat cups 2 and 5 to be placed at a greater distance from each other than the two foremost teat cups 3 and 4, which has the advantage that the teat cups 2 - 5 are more easily connectable to the teats because the disposition of the teat cups 2 - 5 corresponds to a large extent with the configuration of teats of an average cow.

To facilitate hooking the edge 31 into the strip-type receiving member 27, the block 29 in a particular embodiment may be provided with a weak electromagnet. By energizing the electromagnet, the outer jacket of a teat cup is attracted to the seat 30 of the block 29.

In connecting the teat cup, the seat 30 slides along the outer wall of the teat cup by means of a relatively weak electromagnet until the hook-on member 26 engages the receiving member 27. Subsequently, the lifting cylinder 10 is even further slid out and the flexible connecting member 25 is kept tensioned by the actuating cylinder (not shown). To keep the flexible connecting member tensioned, the actuating cylinder is connected to a power source comprising two pressure units. During the upward movement of the teat cup by means of the lifting cylinder 10, the first pressure unit is energized, causing the actuating cylinder to exert a force in the direction opposite to that in which the teat cup is moved in the course of connection.

During the upward movement of the teat cup by means of the lifting cylinder 10, the flexible connecting member 25 thus exerts an opposite force, which has the advantage that the teat cup is constantly kept vertically, while the hook-on member 26 and the receiving member 27 remain firmly pressed to each other. After the teat cup has been connected, the power source of the actuating cylinder of the flexible connecting member 25 is switched off, permitting the teat cup to move freely in relation to the robot arm 1. When the milk flow in the teat cup has come below a certain value, the actuating cylinder of the flexible connecting member 25 is re-energized by the second pressure unit, returning the relevant teat cup through a relatively rapid movement to rest in the tapered recess 24 in the robot arm 1.

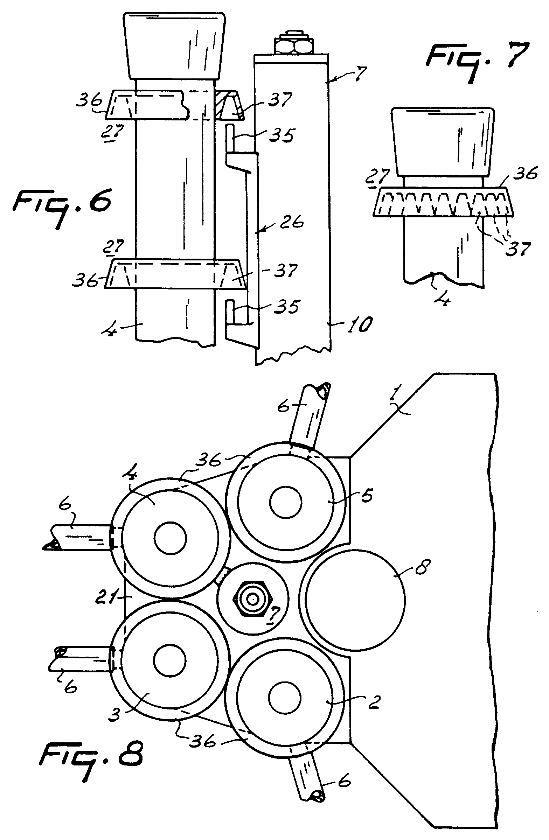

The Figures 6 - 8 represent a third exemplary embodiment of the invention. As is indicated in Figure 8, the coupling means 7 are arranged in the centre of a circle described by the four teat cups 2 - 5 and the sensor means 8. To arrive at a design which is of maximum feasible compactness, the teat cups 2 - 5 and the sensor means 8 are fitted on the robot arm 1 such that they practically touch each other. As Figure 6 depicts, in this exemplary embodiment, the hook-on member 26 comprises two pins 35 pointing upwards at a certain distance from the lifting cylinder 10. The first pin 35 pointing upwards is provided near the top side of the lifting cylinder 10, whereas the second pin 35 is provided near the bottom side of the lifting cylinder 10. In the present embodiment, the receiving members 27 comprise two rings 36, the first ring being provided near the top side of each of the teat cups 2 - 5 and the second ring 36 being provided near the bottom side of each of the teat cups 2 - 5.

When the teat cups 2 - 5 have been withdrawn to the tapered recess 24 of the robot arm 1 by the flexible connecting member 25 and the lifting cylinder 10 has been fully pushed in, the distance from the first pin 35 to the bottom edge of the upper ring 36 is less than the distance from the second pin 35 to the bottom edge of the lower ring 36 (Figure 7). When a teat cup is in the course of being connected, the mutual difference in distance between the pin 35 and the rings 36 causes that the upper pin 35 comes to bear firmly in a tapered recess 37, whereas the lower pin 35 comes into a lower tapered recess where it has some play. Thus, at the lower coupling point there is a certain play which permits a teat cup to rotate slightly during application to a teat, facilitating teat-cup connection. A following teat cup can be seized by the coupling means 7 by pushing-in the lifting cylinder 10 and swivelling the hook-on member through a predetermined angle.

It will be obvious that it is also possible to seize the teat cup with one pin 35 and one ring 36.

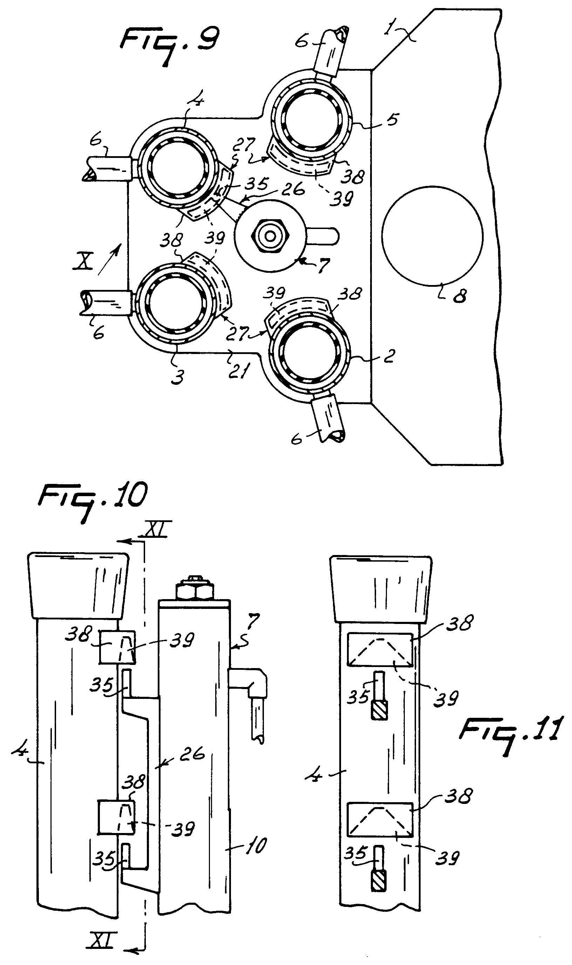

In a fourth exemplary embodiment which is illustrated in Figures 9 - 11, the hook-on member 26 is identical to that of the third exemplary embodiment, while the receiving member comprises a first and a second strip 38 provided near the top side of each of the teat cups 2 - 5 and near the bottom side of each of the teat cups 2 - 5, respectively. The first strip and the second strip 38 extend over a quarter of the circumference of teat cups 2 - 5 and, on the bottom side of each strip, there is provided one tapered recess 39 extending over the full length of the strips 38. As in the third exemplary embodiment, the distance from the first pin 35 to the upper strip 38 is less than the distance from the second pin to the lower strip 38. The coupling of the teat cups 2 - 4 in the fourth embodiment takes place in the same way as in the third exemplary embodiment of the invention.

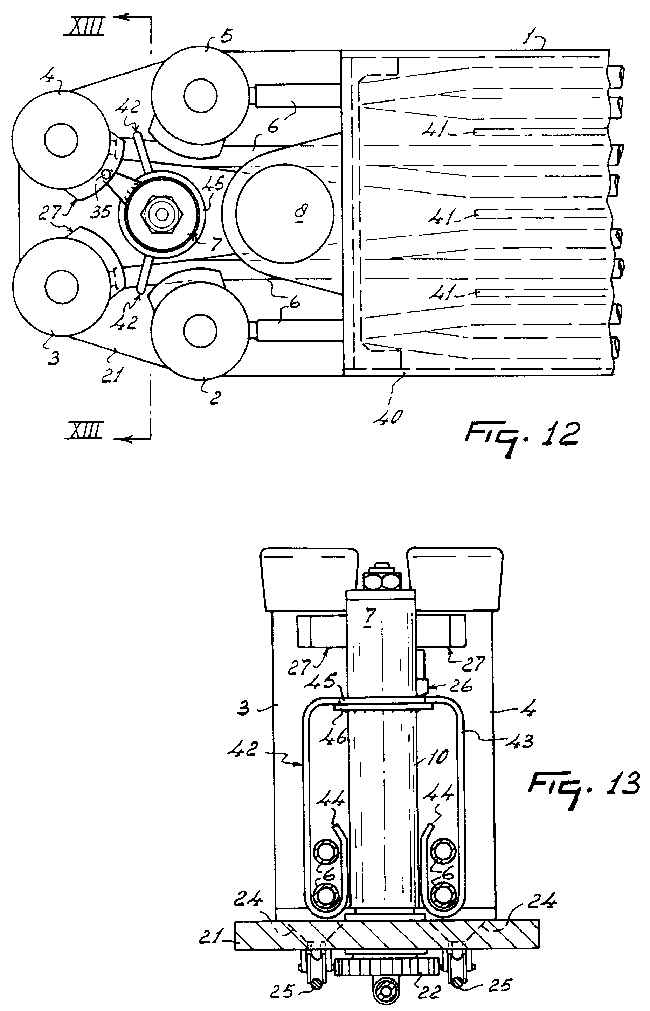

Figures 12 and 13 show still another exemplary embodiment of the invention, where there are provided on the robot arm 1 the same coupling means 7 as in the fourth embodiment according to Figures 9 - 11, which does not alter the fact that what is described hereinafter can also be used with the coupling means 7 as described in the first three exemplary embodiments of the invention. Figure 12 shows a plan view of the robot arm 1, where the milk and pulsator hoses 6 of the teat cups 2 - 5 are very favourably situated in the longitudinal direction of the robot arm 1. Each milk and pulsator hose 6 of a teat cup is in line with the robot arm 1, at least for the greater part installed in the housing 40. The milk and pulsator hoses 6 of each teat cup are separated from each other in the housing by dividing walls 41 placed vertically. Thus, four mutually adjacent tubular housings have been created in the housing 40 wherein, viewed in the longitudinal direction of the robot arm 1, the milk and pulsator hoses 6 are arranged in virtually vertical loops. Each of the tubular housings has a height which virtually corresponds to the height of the teat cups 2 - 5. The milk and pulsator hoses 6 of the two foremost teat cups 3 and 4 extend each along its corresponding side of the swivelling means 20. To prevent the hoses 6 of the two foremost teat cups from interfering with each other, the swivelling means 20 comprise a guide 42. The guide 42 comprises a wire 43 bent in the shape of the letter U, with the ends of the legs 44 of the U-shape being bent over to form a hook (Figure 13). The base of the U-shaped wire 43 comprises a ring 45 slid on the lifting cylinder 10 of the swivelling means 20. The ring 45 of the U-shaped wire 43 rests on a further ring 46 affixed to the outer jacket of the lifting cylinder. As the lifting cylinder 10 swivels, the ring 45 of the U-shaped wire 43 turns about the further ring 46 which is rigidly connected with the outer jacket of the lifting cylinder 10. In this embodiment of the invention, the sensor means 8 are provided on the front side of the housing 40 and extend to above the teat cups 2 - 5.

The invention is not limited to the foregoing, but it also relates to all the details of the drawings, disregarding whether they have been described or not.

## Claims

1. A construction for milking animals, such as cows, provided with a milking robot with a robot arm (11) with at least two teat cups (2 - 5) and with coupling means (7) fitted between a teat cup (2; 3; 4; 5) and the robot arm (11), the coupling means (7) being displaceable so that at least two of the teat cups (2; 3; 4; 5), one after another, can be coupled with the coupling means (7) in order to connect them to the teats of the animal characterized in that the coupling means are implemented as mechanical coupling means.

2. A construction according to claim 1, characterized in that the coupling means (7) comprise a gripper (9) or gripping member (9).

3. A construction according to claim 2, characterized in that the gripper (9) comprises free ends.

4. A construction according to claim 2 or 3, characterized in that the gripper (9) is swivelable about a horizontal axis and, during swivelling, the gripper arms (14) are moved towards each other or away from each other.

5. A construction according to claim 4, characterized in that the gripper arms (14) are made of spring steel and that at least a portion of the arms of the gripper bear against a stop (16).

6. A construction according to claim 5, characterized in that, when viewed in the direction of gripper (9) swivelling, the stop (16) is provided with a flat butting portion (17) which merges into a bevelled butting portion (18).

7. A construction according to any one of claims 2 - 6, characterized in that the gripper (9) comprises a tumbler (11) capable of being swivelled by an actuating cylinder (13) at one end by means of the gripper (9).

8. A construction according to any one of the preceding claims, characterized in that a teat cup (2; 3; 4; 5) is provided with an annular stop (19), against which the gripper (9) bears when the teat cup is seized.

9. A construction according to claim 1, characterized in that the coupling means (7) comprise a hook-on member (26) and at least one receiving member (27) which meshes with the hook-on member (26), with a receiving member (27) being provided on a teat cup (2; 3; 4; 5) and a hook-on member (26) being provided on the robot arm (11), or conversely.

10. A construction according to any one of the preceding claims, characterized in that on the robot arm (1) there are provided swivelling means (20), with the aid of which the coupling means (7) can be swivelled about a shaft extending in an upward direction.

11. A construction according to claim 10, characterized in that the coupling means (7) are disposed in the centre of a circle described by at least two teat cups.

12. A construction according to claim 11, characterized in that the coupling means (7) are provided on a construction which is near the end of the robot arm (11) and is movable in the longitudinal direction of the end of the robot arm (11).

13. A construction according to any one of claims 10 - 12, characterized in that, with the aid of swivelling means (20), the coupling means (7) are capable of being swivelled in between two angular positions through a swivel angle which is symmetrical with respect to the longitudinal direction of the end of the robot arm (1).

14. A construction according to any one of the preceding claims, characterized in that each teat cup (2; 3; 4; 5) is connected with the robot arm (1) through a flexible connecting device (25), one end of which is connected with the bottom side of the teat cup holder (24) and the other end with an actuating cylinder connected to a power source comprising two hydraulic or pneumatic pressure units, which come into action when the teat cup is being connected to a teat and when the teat cup is being withdrawn to the robot arm (1), respectively.

15. A construction according to any one of the preceding claims, characterized in that the receiving member (27) comprises a narrow strip which is oriented obliquely downwards, is disposed near the top side of the teat cup and extends over approximately a quarter of the teat-cup circumference.

16. A construction according to any one of claims 9 - 14, 14, characterized in that the receiving member (27) comprises a ring (36) which is disposed near the top side of the teat cup and which has a plurality of tapered recesses (37) located next to each other at the bottom side.

17. A construction according to claim 16, characterized in that under the first ring (36), near the top side of the teat cups, there is provided a second ring (36) at a certain distance from the first ring (36).

18. A construction according to any one of claims 9 - 14, characterized in that the receiving member (27) comprises a strip (38) which is provided near the top side of the teat cup and which extends over approximately a quarter of the teat cup circumference, whilst on the bottom side of the strip (38) there is provided one tapered recess (39) extending over virtually the full length.

19. A construction according to any one of claims 9 - 18, characterized in that the hook-on member (21) comprises a pin (35) pointing upwards which is disposed at a distance from the swivelling means (20).

20. A construction according to claim 19, characterized in that there is provided a first pin (35) pointing upwards which is disposed near the top side of the swivelling means (20) and a second pin (35) pointing upwards which is disposed near the bottom side of the swivelling means (20).

21. A construction according to claim 20, characterized in that, in the quiescent condition, when the teat cups (2; 3; 4; 5) are on the robot arm (1), the distance from the first pin (35) pointing upwards to the upper receiving member (38) is shorter than the distance from the second pin (35) pointing upwards to the lower receiving member (38).

22. A construction according to any one of claims 9 - 15, 15, characterized in that the hook-on member (26) comprises a block (29) provided on the swivelling means, with the block side facing the teat cup being provided with a seat (30) corresponding with the outer jacket of a teat cup whilst, on the top side of the block (29), near the side facing the teat cup, there is provided an edge (31).

23. A construction according to claim 22, characterized in that the block (29) is provided with two seats (30) arranged in the shape of a V.

24. A construction according to claim 22 or 23, characterized in that the block (29) comprises an electromagnet which is energized during and/or after inserting the hook-on device (26) into the receiving member (27), causing the jacket of the teat cup to make contact with the seat of the block (29).

25. A construction according to any one of claims 22 - 24, 24, characterized in that the block (27) is provided with a through hole (32) in the longitudinal direction.

26. A construction according to any one of claims 9 - 25, 25, characterized in that the receiving member (27) is provided with perforations (28) in an upward direction.

27. A construction according to any one of claims 10 - 26, 26, characterized in that the swivelling means (20) comprise a guide (42) which guides each of the milk and pulsator hoses (6) of the foremost teat cups (3, 4) along one side of the swivelling means (20).

28. A construction according to claim 27, characterized in that the guide (42) comprises a U-shaped bent wire (43), of which the leg ends (44) of the U-shape are bent over to form a hook, while the base of the U-shaped wire comprises a ring (45) slid over the swivelling means (20) and rotatably supported by an other ring (46) fixed in position on the swivelling means (20).

## Patentansprüche

1. Vorrichtung zum Melken von Tieren, wie z. B. Kühen, die mit einem Melkroboter versehen ist, der einen Roboterarm (1) mit mindestens zwei Zitzenbechern (2 bis 5) und einer Verbindungsvorrichtung (7) aufweist, die zwischen einem Zitzenbecher (2; 3; 4; 5) und dem Roboterarm (1) angeordnet ist, wobei die Verbindungsvorrichtung (7) derart verstellbar ist, daß mindestens zwei der Zitzenbecher (2; 3; 4; 5) nacheinander mit der Verbindungsvorrichtung (7) zu verbinden sind, um an die Zitzen des Tieres angeschlossen zu werden, dadurch gekennzeichnet, daß die Verbindungsvorrichtung als mechanische Verbindungsvorrichtung ausgeführt ist.

2. Vorrichtung nach Anspruch 1,
dadurch gekennzeichnet, daß die Verbindungsvorrichtung (7) einen Greifer (9) oder ein Greiferglied (9) aufweist.

3. Vorrichtung nach Anspruch 2,
dadurch gekennzeichnet, daß der Greifer (9) freie Enden aufweist.

4. Vorrichtung nach Anspruch 2 oder 3,
dadurch gekennzeichnet, daß der Greifer (9) um eine horizontale Achse schwenkbar ist und die Greiferarme (14) während des Schwenkens aufeinander zu oder voneinander weg bewegt werden.

5. Vorrichtung nach Anspruch 4,
dadurch gekennzeichnet, daß die Greiferarme (14) aus Federstahl hergestellt sind, und daß zumindest ein Teil der Arme des Greifers an einem Anschlag (16) anliegt.

6. Vorrichtung nach Anspruch 5,
dadurch gekennzeichnet, daß in Schwenkrichtung des Greifers (9) gesehen der Anschlag (16) einen flachen Anlageteil (17) aufweist, der in einen abgeschrägten Anlageteil (18) übergeht.

7. Vorrichtung nach einem der Ansprüche 2 bis 6,
dadurch gekennzeichnet, daß der Greifer (9) einen Schwinghebel (11) aufweist, der durch einen Betätigungszylinder (13) an einem Ende des Greifers (9) verschwenkbar ist.

8. Vorrichtung nach einem der vorhergehenden Ansprüche,
dadurch gekennzeichnet, daß ein Zitzenbecher (2; 3; 4; 5) einen ringförmigen Anschlag (19) aufweist, an dem der Greifer (9) anliegt, wenn der Zitzenbecher ergriffen ist.

9. Vorrichtung nach Anspruch 1,
dadurch gekennzeichnet, daß die Verbindungsvorrichtung (7) ein Einhakglied (26) und mindestens ein Aufnahmeglied (27) aufweist, das mit dem Einhakglied (26) in Eingriff tritt, wobei ein Aufnahmeglied (27) an einem Zitzenbecher (2; 3; 4; 5) und ein Einhakglied (26) am Roboterarm (1) oder umgekehrt angeordnet ist.

10. Vorrichtung nach einem der vorhergehenden Ansprüche,
dadurch gekennzeichnet, daß am Roboterarm (1) eine Schwenkvorrichtung (20) angeordnet ist, mittels der die Verbindungsvorrichtung (7) um eine sich aufwärts erstreckende Achse schwenkbar ist.

11. Vorrichtung nach Anspruch 10,
dadurch gekennzeichnet, daß die Verbindungsvorrichtung (7) in der Mitte eines von mindestens zwei Zitzenbechern beschriebenen Kreises angeordnet ist.

12. Vorrichtung nach Anspruch 11,
dadurch gekennzeichnet, daß die Verbindungsvorrichtung (7) an einer Vorrichtung angebracht ist, die nahe dem Ende des Roboterarmes (1) angeordnet und in Längsrichtung des Endes des Roboterarmes (1) bewegbar ist.

13. Vorrichtung nach einem der Ansprüche 10 bis 12,
dadurch gekennzeichnet, daß die Verbindungsvorrichtung (7) mit Hilfe der Schwenkvorrichtung (20) zwischen zwei Winkelpositionen über einen Schwenkwinkel schwenkbar ist, der in bezug auf die Längserstreckung des Endes des Roboterarmes (1) symmetrisch ist.

14. Vorrichtung nach einem der vorhergehenden Ansprüche,
dadurch gekennzeichnet, daß jeder Zitzenbecher (2; 3; 4; 5) mit einem Roboterarm (1) durch eine elastische Verbindungsvorrichtung (25) verbunden ist, deren eines Ende mit der Unterseite des Zitzenbecherhalters (24) und deren anderes Ende mit einem Betätigungszylinder verbunden ist, der an eine Stromquelle angeschlossen ist und zwei hydraulische oder pneumatische Druckeinheiten aufweist, die aktiviert werden, wenn der Zitzenbecher an eine Zitze angeschlossen wird bzw. wenn der Zitzenbecher an den Roboterarm (1) zurückgezogen wird.

15. Vorrichtung nach einem der vorhergehenden Ansprüche,
dadurch gekennzeichnet, daß das Aufnahmeglied (27) durch einen schmalen, schräg nach unten gerichteten Streifen gebildet und nahe der Oberseite des Zitzenbechers angeordnet ist und sich über etwa ein Viertel des Zitzenbecherumfanges erstreckt.

16. Vorrichtung nach einem der Ansprüche 9 bis 14,
dadurch gekennzeichnet, daß das Aufnahmeglied (27) einen Ring (36) aufweist, der nahe der Oberseite des Zitzenbechers angeordnet ist und mehrere konische Ausnehmungen (37) aufweist, die nebeneinander an der Unterseite angeordnet sind.

17. Vorrichtung nach Anspruch 16,
dadurch gekennzeichnet, daß unter dem ersten Ring (36) nahe der Oberseite der Zitzenbecher in einem gewissen Abstand vom ersten Ring (36) ein zweiter Ring (36) angeordnet ist.

18. Vorrichtung nach einem der Ansprüche 9 bis 14,
dadurch gekennzeichnet, daß das Aufnahmeglied (27) einen Streifen (38) aufweist, der nahe der Oberseite des Zitzenbechers angeordnet ist und sich über etwa ein Viertel des Zitzenbecherumfanges erstreckt, wobei an der Unterseite des Streifens (38) eine konische Ausnehmung (39) vorgesehen ist, die sich praktisch über die gesamte Länge erstreckt.

19. Vorrichtung nach einem der Ansprüche 9 bis 18,
dadurch gekennzeichnet, daß das Einhakglied (26) einen aufwärts gerichteten Stift (35) aufweist, der in einem Abstand zu der Schwenkvorrichtung (20) angeordnet ist.

20. Vorrichtung nach Anspruch 19,
dadurch gekennzeichnet, daß ein erster aufwärts gerichteter Stift (35) vorhanden ist, der nahe der Oberseite der Schwenkvorrichtung (20) angeordnet ist, sowie ein zweiter aufwärts gerichteter Stift (35), der nahe der Unterseite der Schwenkvorrichtung (20) angeordnet ist.

21. Vorrichtung nach Anspruch 20,
dadurch gekennzeichnet, daß in der Ruhelage, in der die Zitzenbecher (2; 3; 4; 5) am Roboterarm (1) anliegen, der Abstand des ersten aufwärts gerichteten Stiftes (35) zum oberen Aufnahmeglied (38) geringer ist als der Abstand des zweiten aufwärts gerichteten Stiftes (35) zum unteren Aufnahmeglied (38).

22. Vorrichtung nach einem der Ansprüche 9 bis 15,
dadurch gekennzeichnet, daß das Einhakglied (26) einen an der Schwenkvorrichtung angeordneten Block (29) aufweist, wobei die dem Zitzenbecher zugewandte Seite des Blocks einen Sitz (30) aufweist, der dem Außenmantel eines Zitzenbechers entspricht, und wobei an der Oberseite des Blocks (29) nahe der dem Zitzenbecher zugewandten Seite ein Rand (31) ausgebildet ist.

23. Vorrichtung nach Anspruch 22,
dadurch gekennzeichnet, daß der Block (29) zwei Sitze (30) aufweist, die V-förmig angeordnet sind.

24. Vorrichtung nach Anspruch 22 oder 23,
dadurch gekennzeichnet, daß der Block (29) einen Elektromagneten aufweist, der während und/oder nach Einsetzen der Einhakvorrichtung (26) in das Aufnahmeglied (27) aktiviert wird und bewirkt, daß der Mantel des Zitzenbechers mit dem Sitz des Blockes (29) in Kontakt tritt.

25. Vorrichtung nach einem der Ansprüche 22 bis 24,
dadurch gekennzeichnet, daß der Block (29) in Längsrichtung eine Durchtrittsöffnung (32) aufweist.

26. Vorrichtung nach einem der Ansprüche 9 bis 25,
dadurch gekennzeichnet, daß das Aufnahmeglied (27) in Aufwärtsrichtung Perforationen (28) aufweist.

27. Vorrichtung nach einem der Ansprüche 10 bis 26,
dadurch gekennzeichnet, daß die Schwenkvorrichtung (20) eine Führung (42) aufweist, mittels der jede der Milch- und Pulsierleitungen (6) der vorderen Zitzenbecher (3, 4) an einer Seite der Schwenkvorrichtung (20) entlanggeführt wird.

28. Vorrichtung nach Anspruch 27,
dadurch gekennzeichnet, daß die Führung (42) aus einem U-förmig gebogenen Draht (43) besteht, wobei die Schenkelenden (44) des U hakenförmig umgebogen sind, während die Basis des U-förmigen Drahtes einen Ring (45) aufweist, der über die Schwenkvorrichtung (20) geschoben und durch einen weiteren Ring (46) drehbar abgestützt ist, der an der Schwenkvorrichtung (20) lagefest angeordnet ist.

## Revendications

1. Dispositif de traite d'animaux, tels que vaches, muni d'un robot de traite ayant un bras de robot (11) comportant au moins deux gobelets trayeurs (2 à 5) et des moyens d'accouplement (7) agencés entre un gobelet trayeur (2; 3; 4; 5) et le bras de robot (11), les moyens d'accouplement (7) pouvant être déplacés de sorte qu'au moins deux des gobelets trayeurs (2; 3; 4; 5), l'un après l'autre, peuvent être couplés aux moyens d'accouplement (7) afin de les relier aux trayons de l'animal, caractérisé en ce que les moyens d'accouplement sont réalisés sous la forme de moyens d'accouplement mécaniques.

2. Dispositif selon la revendication 1, caractérisé en ce que les moyens d'accouplement (7) comportent un dispositif de saisie (9) ou un élément de saisie (9).

3. Dispositif selon la revendication 2, caractérisé en ce que le dispositif de saisie (9) comporte des extrémités libres.

4. Dispositif selon la revendication 2 ou 3, caractérisé en ce que le dispositif de saisie (9) peut pivoter autour d'un axe horizontal et, pendant le pivotement, les bras (14) du dispositif de saisie sont déplacés l'un vers l'autre ou en s'éloignant l'un de l'autre.

5. Dispositif selon la revendication 4, caractérisé en ce que les bras (14) du dispositif de saisie sont constitués d'acier pour ressort et en ce qu'au moins une partie des bras du dispositif de saisie vient en appui contre une butée (16).

6. Dispositif selon la revendication 5, caractérisé en ce que, lorsqu'elle est vue dans la direction du dispositif de saisie (9) pivotant, la butée (16) est munie d'une partie de butée plate (17) qui fusionne avec une partie de butée inclinée (18).

7. Dispositif selon l'une quelconque des revendications 2 à 6, caractérisé en ce que le dispositif de saisie (9) comporte un culbuteur (11) pouvant être mis à pivoter par un vérin d'actionnement (13) à une extrémité par l'intermédiaire du dispositif de saisie (9).

8. Dispositif selon l'une quelconque des revendications précédentes, caractérisé en ce qu'un gobelet trayeur (2; 3; 4; 5) est muni d'une butée annulaire (19) contre laquelle le dispositif de saisie (9) est en appui lorsque le gobelet trayeur est saisi.

9. Dispositif selon la revendication 1, caractérisé en ce que les moyens d'accouplement (7) comportent un élément d'accrochage (26) et au moins un élément de réception (27) qui engrène avec l'élément d'accrochage (26), l'élément de réception (27) étant agencé sur un gobelet trayeur (2; 3; 4; 5) et un élément d'accrochage (26) étant agencé sur le bras de robot (11), ou inversement.

10. Dispositif selon l'une quelconque des revendications précédentes, caractérisé en ce que sur le bras de robot (1) sont agencés des moyens de pivotement (20), à l'aide desquels les moyens d'accouplement (7) peuvent être mis à pivoter autour d'un arbre s'étendant dans une direction verticale.

11. Dispositif selon la revendication 10, caractérisé en ce que les moyens d'accouplement (7) sont disposés au centre d'un cercle décrit par au moins deux gobelets trayeurs.

12. Dispositif selon la revendication 11, caractérisé en ce que les moyens d'accouplement (7) sont agencés sur un dispositif qui est proche de l'extrémité du bras de robot (11) et qui peut se déplacer dans la direction longitudinale de l'extrémité du bras de robot (11).

13. Dispositif selon l'une quelconque des revendications 10 à 12, caractérisé en ce que, à l'aide des moyens de pivotement (20), les moyens d'accouplement (7) peuvent pivoter entre deux positions angulaires sur un angle de pivotement qui est symétrique par rapport à la direction longitudinale de l'extrémité du bras de robot (1).

14. Dispositif selon l'une quelconque des revendications précédentes, caractérisé en ce que chaque gobelet trayeur (2; 3; 4; 5) est relié au bras de robot (1) par l'intermédiaire d'un dispositif de connexion souple (25), dont une extrémité est reliée au côté inférieur du support de gobelet trayeur (24) et l'autre extrémité à un vérin d'actionnement relié à une source de puissance comportant deux unités de pression hydraulique ou pneumatique, qui viennent en action lorsque le gobelet trayeur est connecté à un trayon et lorsque le gobelet trayeur est retiré vers le bras de robot (1), respectivement.

15. Dispositif selon l'une quelconque des revendications précédentes, caractérisé en ce que l'élément de réception (27) comporte une bande étroite qui est orientée en oblique vers le bas, et qui est disposée à proximité du côté supérieur du gobelet trayeur et s'étend sur approximativement un quart de la circonférence du gobelet trayeur.

16. Dispositif selon l'une quelconque des revendications 9 à 14, caractérisé en ce que l'élément de réception (27) comporte un anneau (36) qui est disposé à proximité du côté supérieur du gobelet trayeur et qui a une pluralité d'évidements coniques (37) positionnés à proximité l'un de l'autre au niveau du côté inférieur.

17. Dispositif selon la revendication 16, caractérisé en ce que sous le premier anneau (36), à proximité du côté supérieur des gobelets trayeurs, est agencé un second anneau (36) situé à une certaine distance du premier anneau (36).

18. Dispositif selon l'une quelconque des revendications 9 à 14, caractérisé en ce que l'élément de réception (27) comporte une bande (38) qui est agencée à proximité du côté supérieur du gobelet trayeur et qui s'étend sur approximativement un quart de la circonférence du gobelet trayeur, alors que sur le côté inférieur de la bande (38) est agencé un évidement conique (39) s'étendant pratiquement sur toute la longueur.

19. Dispositif selon l'une quelconque des revendications 9 à 18, caractérisé en ce que l'élément d'accrochage (21) comporte un axe (35) dirigé vers le haut qui est disposé à distance des moyens de pivotement (20).

20. Dispositif selon la revendication 19, caractérisé en ce qu'un premier axe (35) est agencé dirigé vers le haut qui est disposé à proximité du côté supérieur des moyens de pivotement (20) et un second axe (35) est agencé dirigé vers le haut qui est disposé à proximité du côté inférieur des moyens de pivotement (20).

21. Dispositif selon la revendication 20, caractérisé en ce que, dans l'état de repos, lorsque les gobelets trayeurs (2; 3; 4; 5) sont sur le bras de robot (1), la distance à partir du premier axe (35) dirigé vers le haut jusqu'à l'élément de réception supérieur (38) est plus courte que la distance allant du second axe (35) dirigé vers le haut jusqu'à l'élément de réception inférieur (38).

22. Dispositif selon l'une quelconque des revendications 9 à 15, caractérisé en ce que l'élément d'accrochage (26) comporte un bloc (29) agencé sur les moyens de pivotement, le côté de bloc dirigé vers le gobelet trayeur étant muni d'un siège (30) correspondant à l'enveloppe extérieure d'un gobelet trayeur alors que sur le côté supérieur du bloc (29), à proximité du côté dirigé vers le gobelet trayeur, est agencé un bord (31).

23. Dispositif selon la revendication 22, caractérisé en ce que le bloc (29) est muni de deux sièges (30) agencés selon la forme d'un V.

24. Dispositif selon la revendication 22 ou 23, caractérisé en ce que le bloc (29) comporte un électroaimant qui est mis sous tension pendant et/ou après l'insertion du dispositif d'accrochage (26) dans l'élément de réception (27), amenant l'enveloppe du gobelet trayeur à venir en contact avec le siège du bloc (29).

25. Dispositif selon l'une quelconque des revendications 22 à 24, caractérisé en ce que le bloc (27) est muni d'un trou (32) traversant dans la direction longitudinale.

26. Dispositif selon l'une quelconque des revendications 9 à 25, caractérisé en ce que l'élément de réception (27) est muni de perforations (28) dans la direction verticale.

27. Dispositif selon l'une quelconque des revendications 10 à 26, caractérisé en ce que les moyens de pivotement (20) comportent un guide (42) qui guide chacun des tuyaux de lait et de pulsation (6) des gobelets trayeurs les plus en avant (3, 4) le long d'un côté des moyens de pivotement (20).

28. Dispositif selon la revendication 27, caractérisé en ce que le guide (42) comporte un fil incurvé en forme de U (43), dont les extrémités de jambe (44) de la forme en U sont retournées pour former un crochet, alors que la base du fil en forme de U constitue un anneau (45) glissé sur les moyens de pivotement (20) et supporté de manière rotative par un autre anneau (46) fixé en position sur les moyens de pivotement (20).
